## Europäisches Patentamt
## European Patent Office
## Office européen des brevets

(11) Veröffentlichungsnummer: **0 212 118 B1**

## (12) EUROPÄISCHE PATENTSCHRIFT

(45) Veröffentlichungstag der Patentschrift:
**30.01.91 Patentblatt 91/05**

(51) Int. Cl.$^5$: **G01D 3/08, G01B 7/02,**
**G01B 21/00, G01B 7/00**

(21) Anmeldenummer: **86108088.5**

(22) Anmeldetag: **13.06.86**

(54) **Digitale elektrische Längen- oder Winkelmesseinrichtung mit einer Schaltungsanordnung zur Fehlerüberwachung.**

(30) Priorität: **10.08.85 DE 3528796**

(43) Veröffentlichungstag der Anmeldung:
**04.03.87 Patentblatt 87/10**

(45) Bekanntmachung des Hinweises auf die Patenterteilung:
**30.01.91 Patentblatt 91/05**

(84) Benannte Vertragsstaaten:
**AT CH DE FR GB IT LI NL SE**

(56) Entgegenhaltungen:
**DE-A- 3 323 281**
**DE-B- 1 221 668**
**DE-B- 1 238 225**
**DE-C- 2 022 151**

(73) Patentinhaber: **DR. JOHANNES HEIDENHAIN GMBH**
**Dr.-Johannes-Heidenhain-Strasse 5 Postfach 1260**
**D-8225 Traunreut (DE)**

(72) Erfinder: **Schmitt, Walter, Ing. grad.**
**Hochgernstrasse 22**
**D-8225 Traunreut (DE)**

EP 0 212 118 B1

## Beschreibung

Die Erfindung betrifft eine digitale elektrische Längen- oder Winkelmeßeinrichtung mit einer Schaltungsanordnung zur Fehlerüberwachung gemäß dem Oberbegriff des Anspruchs 1.

Derartige Positionsmeßeinrichtungen werden insbesondere bei Bearbeitungsmaschinen zur Messung der Relativlage eines Werkzeugs bezüglich eines zu bearbeitenden Werkstücks sowie bei Koordinatenmeßmaschinen zur Ermittlung von Lage und-/oder Abmessungen von Prüfobjekten eingesetzt.

Aus der DE-AS 12 38 225 ist eine inkrementale Positionsmeßeinrichtung bekannt, bei der eine Maßverkörperung von zwei unabhängigen, nach verschiedenen physikalischen Prinzipien arbeitenden Abtasteinheiten abgetastet wird. Diese beiden Abtasteinheiten sind über zwei getrennte Kanäle mit einer Kontrolleinrichtung zur Kontrolle und Anzeige von auftretenden Differenzen in den Abtastwerten verbunden.

In der DE-PS 20 22 151 ist ein Verfahren zur Fehlervermeidung bei inkrementalen Meßeinrichtungen beschrieben, bei dem die bei der Abtastung eines Maßstabs mittels einer Abtasteinheit gewonnenen phasenversetzten Abtastsignale gleichzeitig einer Auswerteeinheit und einer Fehlerüberwachungseinheit zur Kontrolle des Phasenwinkels und der Amplitudenhöhe der Abtastsignale zugeführt werden. Bei fehlerhaften Signalparametern dieser Abtastsignale, z.B. infolge Verschmutzung, Alterung oder Verschleiß der Meßeinrichtung, wird ein Fehlersignal dieser Fehlerüberwachungseinheit über eine separate Leitung einer Warnlampe zugeleitet, die in der Auswerteeinheit vorgesehen sein kann.

In der DE-OS 33 23 281 ist ein weiteres Verfahren zur Fehlerüberwachung bei einer inkrementalen Positionsmeßeinrichtung angegeben, bei dem die bei der Abtastung eines Maßstabs mittels einer Abtasteinheit gewonnenen phasenversetzten Abtastsignale einmal an eine Auswerteeinheit übertragen und zum anderen einer Fehlerüberwachungseinheit zugeführt werden, die bei fehlerhaften Signalparametern dieser Abtastsignale ein Fehlersignal erzeugt. Dieses Fehlersignal bewirkt ein Gleichphasigschalten der beiden phasenversetzten Abtastsignale vor deren Übertragung ; diese Gleichphasigkeit der beiden Abtastsignale nach deren Übertragung wird von einem Phasendiskriminator der Auswerteeinheit zur Ausgabe einer Fehlermeldung erkannt.

Aus der DE-AS 12 21 668 ist noch ein Verfahren zur Fehlervermeidung bei einer Informationsübertragung bekannt, bei dem in einen Übertragungsweg eingestreute Störimpulse unterdrückt werden, indem die zu übertragenden bipolaren Impulse als komplementäre Impulse gleicher Phasenlage auf verschiedenen Kanälen einem logischen Netzwerk auf der Empfängerseite zugeführt werden. Über den Ausgang des logischen Netzwerkes wird nur dann ein Ausgangssignal abgegeben, wenn auf beiden Übertragungskanälen gleichzeitig zwei komplementäre Impulse eintreffen.

Der Erfindung liegt die Aufgabe zugrunde, bei einer digitalen elektrischen Längen- oder Winkelmeßeinrichtung eine Schaltungsanordnung zur Fehlerüberwachung bei der Übertragung wenigstens zweier Binärsignale anzugeben, die mit einfachen Mitteln eine sichere Fehlererkennung erlaubt.

Diese Aufgabe wird durch die Einrichtung gemäß dem Anspruch 1 gelöst.

Die mit der Erfindung erzielten Vorteile bestehen insbesondere darin, daß die vorgeschlagene Schaltungsanordnung eine Fehlerüberwachung bei der Übertragung wenigstens zweier Binärsignale mit nur einer zusätzlichen Übertragungsleitung erlaubt, da lediglich ein zusätzliches aus den zu übertragenden Binärsignalen durch eine logische Verknüpfung abgeleitetes Binärsignal übertragen werden muß, so daß sich eine einfach aufgebaute und preisgünstige Schaltungsanordnung ergibt, die eine sichere Fehlererkennung ermöglicht. Darüberhinaus kann auch das fehlerhafte Verhalten der wesentlichen Bauelemente der Meßeinrichtung erkannt werden.

Vorteilhafte Ausgestaltungen der Erfindung entnimmt man den abhängigen Ansprüchen.

Ausführungsbeispiele der Erfindung werden anhand der Zeichnung näher erläutert.

Es zeigen

Fig. 1 eine erste Schaltungsanordnung zur Fehlerüberwachung ;

Fig. 2 ein zugehöriges erstes Signaldiagramm ;

Fig. 3 eine zweite Schaltungsanordnung zur Fehlerüberwachung ;

Fig. 4 ein zugehöriges zweites Signaldiagramm.

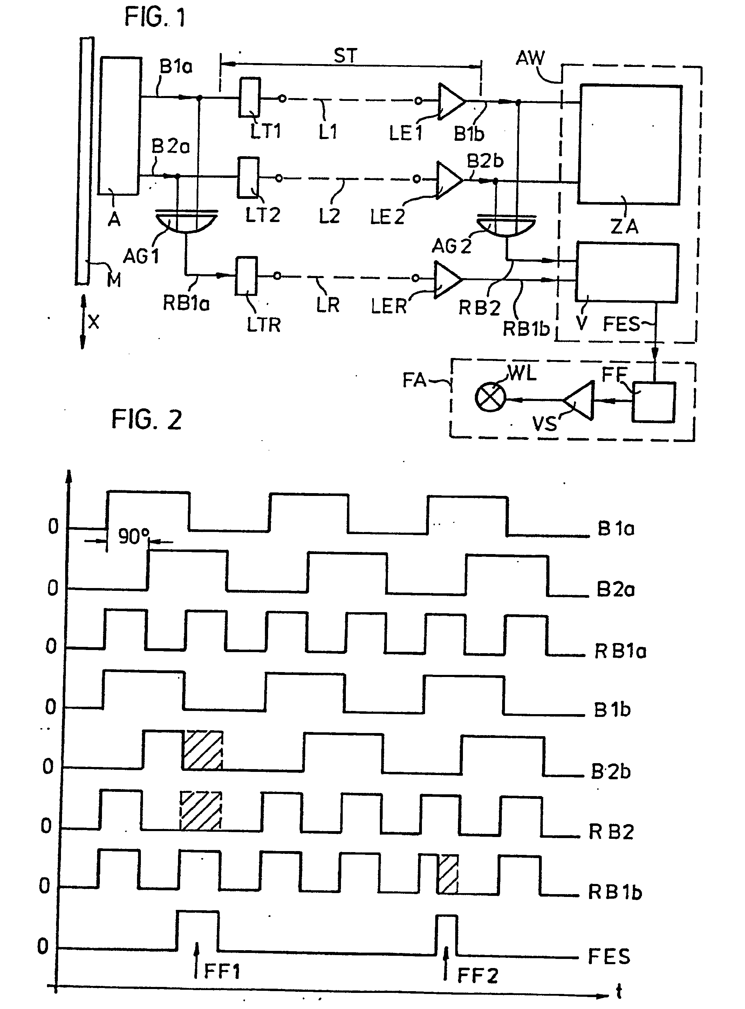

In Figur 1 ist eine erste Schaltungsanordnung zur Fehlerüberwachung bei einer ersten digitalen elektrischen inkrementalen Längenmeßeinrichtung dargestellt, bei der eine in Meßrichtung X verschiebliche Maßverkörperung M von einer Abtasteinheit A abgetastet wird. Die Maßverkörperung M und die Abtasteinheit A sind jeweils mit nicht gezeigten Objekten verbunden, deren Relativlage gemessen werden soll und die beispielsweise aus zwei Maschinenteilen einer Bearbeitungsmaschine oder Meßmaschine bestehen können. Die Abtasteinheit A ist über zwei Übertragungsleitungen L1, L2 einer Übertragungsstrecke ST mit einer Auswerteeinheit AW verbunden. Von der Abtasteinheit A werden zwei Binärsignale B1a, B2a in Form zweier periodischer Rechtecksignale mit einem gegenseitigen Phasenversatz von 90° geliefert, wobei das erste Binärsignal B1a über die erste Übertragungsleitung L1 und das zweite Binärsignal B2a über die zweite Übertragungsleitung L2 übertragen und als übertragenes erstes Binärsignal B1b und als übertragenes zweites Binärsignal B2b einer Zähler-/Anzeigeeinheit ZA mit einem Richtungsdiskriminator in der Auswerteeinheit AW zum vorzeichenrichtigen Zählen der Inkremente der Teilung der Maßverkörperung M bei der Abtastung durch die Abtasteinheit A und zur digitalen Anzeige der Positionsmeßwerte für die Relativlage der beiden zueinander verschieblichen Objekte zugeführt werden.

Zur Fehlerüberwachung der Übertragung der beiden Binärsignale B1a, B2a von der Abtasteinheit A zur Auswerteeinheit AW wird vor der Übertragungsstrecke ST aus den beiden Binärsignalen B1a, B2a mittels einer ersten logischen Verknüpfungseinheit AG1 in Form eines ersten Antivalenzgatters (Exklusiv-Oder-Gatter) ein erstes redundantes Binärsignal RB1a abgeleitet, über eine redundante Übertragungsleitung LR der Übertragungsstrecke ST übertragen und als übertragenes erstes redundantes Binärsignal RB1b einem Vergleicher V der Auswerteeinheit AW zugeführt. Nach der Übertragungsstrecke ST wird aus den beiden übertragenen Binärsignalen B1b, B2b mittels einer zweiten logischen Verknüpfungseinheit AG2 in Form eines zweiten Antivalenzgatters ein zweites redundantes Binärsignal RB2 abgeleitet und ebenfalls dem Vergleicher V der Auswerteeinheit AW zugeführt. Der Vergleicher V erzeugt bei einer Gleichheit zwischen dem übertragenen ersten redundanten Binärsignal RB1b und dem zweiten redundanten Binärsignal RB2 ein binäres Fehlererkennungssignal FES mit einem ersten Signalpegel 0 (logisch 0) zur Charakterisierung eines fehlerfreien Zustandes und bei einer Ungleichheit zwischen dem übertragenen ersten redundanten Binärsignal RB1b und dem zweiten redundanten Binärsignal RB2 das binäre Fehlererkennungssignal FES mit einem zweiten Signalpegel 1 (logisch 1) zur Charakterisierung fehlerhafter Zustände bei der Übertragung der beiden Binärsignale B1a, B2a sowie des ersten redundanten Binärsignals RB1a. Zur optimalen Übertragung der beiden Binärsignale B1a, B2a sowie des ersten redundanten Binärsignals RB1a weisen die beiden Übertragungsleitungen L1, L2 sowie die redundante Übertragungsleitung LR der Übertragungsstrecke ST jeweils Leitungstreiber LT1, LT2, LTR sowie Leitungsempfänger LE1, LE2, LER auf.

In Figur 2 sind in einem zugehörigen ersten Signaldiagramm die von der Abtasteinheit A gelieferten beiden Binärsignale B1a, B2a mit dem gegenseitigen Phasenversatz von 90° mitsamt dem aus diesen beiden Binärsignalen B1a, B2a abgeleiteten ersten redundanten Binärsignal RB1a vor der Übertragungsstrecke ST sowie die beiden übertragenen Binärsignale B1b, B2b mitsamt dem aus diesen beiden übertragenen Binärsignalen B1b, B2b abgeleiteten zweiten redundanten Binärsignal RB2 nach der Übertragungsstrecke ST dargestellt. Infolge jeweils einer Störung auf der Übertragungsstrecke ST ergeben sich aus dem fehlerfreien zweiten Binärsignal B2a ein fehlerbehaftetes übertragenes zweites Binärsignal B2b (erster Fehlerfall FF1) und aus dem fehlerfreien ersten redundanten Binärsignal RB1a ein fehlerbehaftetes übertragenes erstes redundantes Binärsignal RB1b (zweiter Fehlerfall FF2). Das vom Vergleicher V beim Vergleich zwischen dem übertragenen ersten redundanten Binärsignal RB1b und dem zweiten redundanten Binärsignal RB2 erzeugte binäre Fehlererkennungssignal FES weist demnach an den Stellen des ersten Fehlerfalls FF1 und des zweiten Fehlerfalls FF2 den Signalpegel 1 für den fehlerhaften Zustand und im übrigen Bereich den Signalpegel 0 für den fehlerfreien Zustand auf.

Das am Ausgang des Vergleichers V anstehende binäre Fehlererkennungssignal FES zur Charakterisierung des fehlerfreien Zustandes oder des fehlerhaften Zustandes wird einer Fehleranzeigeeinheit FA mit einer bistabilen Kippstufe FF, einem Verstärker VS und einer Warnlampe WL zugeführt. Im fehlerfreien Zustand steuert das binäre Fehlererkennungssignal FES mit dem Signalpegel 0 die bistabile Kippstufe FF nicht an, so daß die Warnlampe WL bei diesem fehlerfreien Zustand nicht aufleuchtet. Im fehlerhaften Zustand wird die bistabile Kippstufe FF vom binären Fehlererkennungssignal FES mit dem Signalpegel 1 angesteuert, so daß die Warnlampe WL bei diesem fehlerhaften Zustand aufleuchtet.

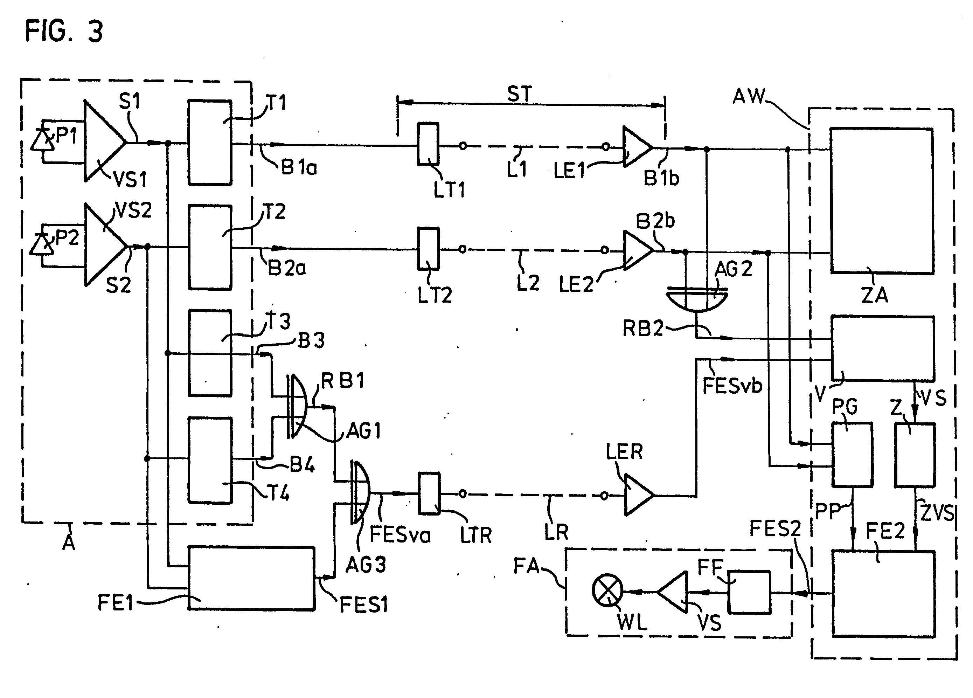

In Figur 3 ist eine zweite Schaltungsanordnung zur Fehlerüberwachung bei einer zweiten digitalen elektrischen inkrementalen Längenmeßeinrichtung dargestellt, bei der die mit der Figur 1 identischen Elemente die gleichen Bezugszeichen aufweisen. Eine Abtasteinheit A zur Abtastung der Teilung der Maßverkörperung M nach Figur 1 weist neben einer Beleuchtungseinheit und einer Abtastplatte (nicht dargestellt) ein erstes Photoelement P1 mit einem nachgeschalteten ersten Verstärker VS1 sowie ein zweites Photoelement P2 mit einem nachgeschalteten zweiten Verstärker VS2 auf. Das vom ersten Verstärker VS1 gelieferte erste sinusförmige Analogsignal S1 wird einmal einem ersten Trigger T1 zur Bildung eines ersten Binärsignals B1a und zum anderen einem dritten Trigger T3 zur Bildung eines dritten Binärsignals B3 zugeführt; desgleichen wird das vom zweiten Verstärker VS2 gelieferte zweite sinusförmige Analogsignal S2 einmal einem zweiten Trigger T2 zur Bildung eines zweiten Binärsignals B2a und zum anderen einem vierten Trigger T4 zur Bildung eines vierten Binärsignals B4 zugeleitet. Zwischen dem ersten Binärsignal B1a und dem zweiten Binärsignal B2a sowie zwischen dem dritten Binärsignal B3 und dem vierten Binärsignal B4 besteht ein jeweiliger Phasenversatz von 90°. Die beiden Verstärker VS1, VS2 sowie die vier Trigger T1-T4 sind Bestandteile der Abtasteinheit A.

Zusätzlich beaufschlagen die beiden Analogsignale S1, S2 noch eine erste Fehlererkennungseinheit FE1, die bei fehlerhaften Signalparametern der beiden Analogsignale S1, S2 ein erstes binäres Fehlererkennungssignal FES1 erzeugt. Fehlerhafte Signalparameter bei den beiden Analogsignalen S1, S2 liegen dann vor, wenn die beiden Analogsignale S1, S2 beispielsweise Gleichspannungsanteile sowie Abweichungen von der geforderten Amplitudenhöhe sowie vom erforderlichen Phasenversatz aufweisen. Derartige fehlerhafte Signalparameter können ihre Ursache beispielsweise in einer Verschmutzung oder Beschädigung der Teilungen der Maßverkörperung M und der Abtastplatte, in Teilungsfehlern sowie in einem fehlerhaften Arbeiten der vier Photoelemente P1-P4 und der beiden Verstärker VS1, VS2 haben. Bei fehlerfreien Signalparametern der beiden Analogsignale S1, S2 besitzt das erste binäre Fehlererkennungssignal FES1 den Signalpegel 0 (logisch 0) und bei fehlerhaften Signalparametern den Signalpegel 1 (logisch 1).

Von der Abtasteinheit A werden das erste Binärsignal B1a über eine erste Übertragungsleitung L1 und das zweite Binärsignal B2a über eine zweite Übertragungsleitung L2 einer Übertragungsstrecke ST übertragen und als übertragenes erstes Binärsignal B1b und als übertragenes zweites Binärsignal B2b einer Zähler-/Anzeigeeinheit ZA mit einem Richtungsdiskriminator in der Auswerteeinheit AW zugeführt.

Zur Fehlerüberwachung der Übertragung der beiden Binärsignale B1a, B2a von der Abtasteinheit A zur Auswerteeinheit AW wird vor der Übertragungsstrecke ST aus dem dritten Binärsignal B3 und dem vierten Binärsignal B4 mittels einer ersten logischen Verknüpfungseinheit AG1 in Form eines ersten Antivalenzgatters (Exklusiv-Oder-Gatter) ein erstes redundantes Binärsignal RB1 abgeleitet und mit dem ersten binären Fehlererkennungssignal FES1 mittels einer dritten logischen Verknüpfungseinheit AG3 in Form eines dritten Antivalenzgatters zu einem verknüpften binären Fehlererkennungssignal FESva verknüpft. Dieses verknüpfte binäre Fehlererkennungssignal FESva wird über eine redundante Übertragungsleitung LR der Übertragungsstrecke ST übertragen und als übertragenes verknüpftes binäres Fehlererkennungssignal FESvb einem Vergleicher V der Auswerteeinheit AW zugeführt. Nach der Übertragungsstrecke ST wird aus dem übertragenen ersten Binärsignal B1b und dem übertragenen zweiten Binärsignal B2b mittels einer zweiten logischen Verknüpfungseinheit AG2 in Form eines Antivalenzgatters ein zweites redundantes Binärsignal RB2 abgeleitet und ebenfalls dem Vergleicher V der Auswerteeinheit AW zugeführt. Dem Vergleicher V ist über ein Zeitglied Z eine zweite Fehlererkennungseinheit FE2 nachgeschaltet, die bei einer Gleichheit zwischen dem übertragenen verknüpften binären Fehlererkennungssignal FESvb und dem zweiten redundanten Binärsignal RB2 ein zweites binäres Fehlererkennungssignal FES2 mit einem ersten Signalpegel 0 (logisch 0) zur Charakterisierung eines fehlerfreien Zustandes und bei einer Ungleichheit zwischen dem übertragenen verknüpften binären Fehlererkennungssignal FESvb und dem zweiten redundanten Binärsignal RB2 das zweite binäre Fehlererkennungssignal FES2 mit einem zweiten Signalpegel 1 (logisch 1) zur Charakterisierung fehlerhafter Zustände bei der Übertragung des ersten Binärsignals B1a und des zweiten Binärsignals B2a sowie des verknüpften binären Fehlererkennungssignals FESva erzeugt. Das zweite binäre Fehlererkennungssignal FES2 ermöglicht darüberhinaus auch ein Erkennen eines fehlerhaften Verhaltens der beiden Photoelemente P1, P2 sowie der beiden Verstärker VS1, VS2 durch das erste binäre Fehlererkennungssignal FES1 sowie eines fehlerhaften Verhaltens der vier Trigger T1-T4 der Abtasteinheit A durch das erste redundante Binärsignal RB1. Die zweite Fehlererkennungseinheit FE2 wird von einem Prüfimpuls PP eines Prüfimpulsgebers PG beaufschlagt, der vom übertragenen ersten Binärsignal B1b und vom übertragenen zweiten Binärsignal B2b abgeleitet wird und den Zeitpunkt der Fehlerüberwachung bestimmt. Zur optimalen Übertragung des ersten Binärsignals B1a und des zweiten Binärsignals B2a sowie des verknüpften binären Fehlererkennungssignals FESva weisen die beiden Übertragungsleitungen L1, L2 sowie die redundante Übertragungsleitung LR der Übertragungsstrecke ST jeweils Leitungstreiber LT1, LT2, LTR sowie Leitungsempfänger LE1, LE2, LER auf.

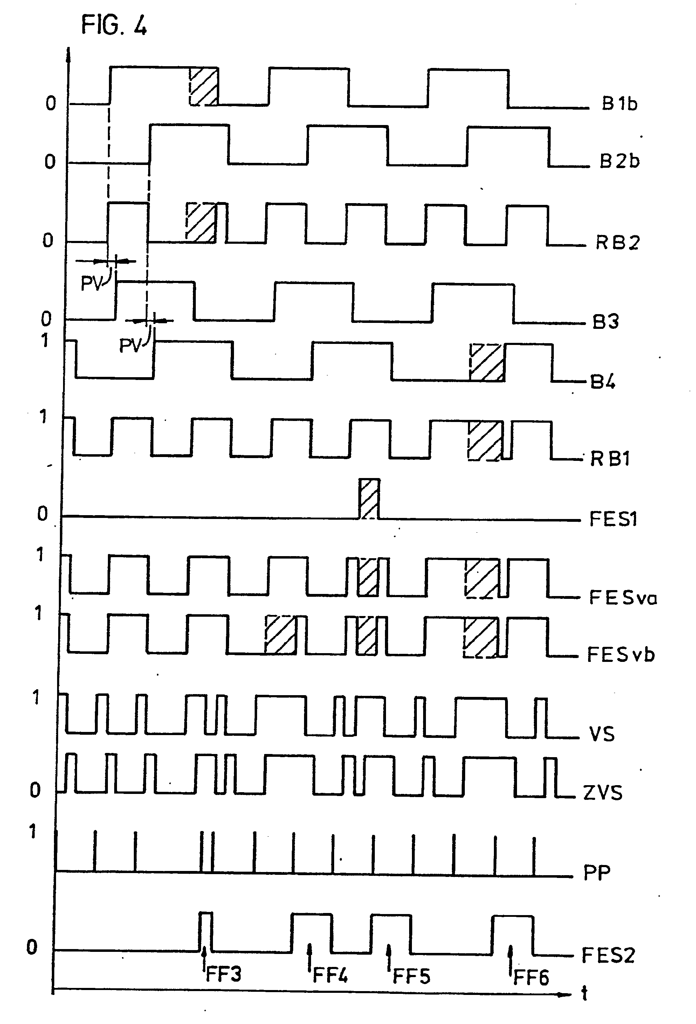

In Figur 4 sind in einem zugehörigen zweiten Signaldiagramm das übertragene erste Binärsignal B1b und das übertragene zweite Binärsignal B2b mitsamt dem aus diesen beiden übertragenen Binärsignalen B1b, B2b abgeleiteten zweiten redundanten Binärsignal RB2 nach der Übertragungsstrecke ST sowie das dritte Binärsignal B3 und das vierte Binärsignal B4 mitsamt dem aus diesen beiden Binärsignalen B3, B4 abgeleiteten ersten redundanten Binärsignal RB1 vor der Übertragungsstrecke ST dargestellt. Das dritte Binärsignal B3 weist gegenüber dem ersten Binärsignal B1a und dem übertragenen ersten Binärsignal B1b und das vierte Binärsignal B4 gegenüber dem zweiten Binärsignal B2a und dem übertragenen zweiten Binärsignal B2b einen bestimmten Phasenversatz PV auf, der durch eine größere Hysterese des dritten Triggers T3 und des vierten Triggers T4 gegenüber dem ersten Trigger T1 und dem zweiten Trigger T2 hervorgerufen wird.

Infolge jeweils einer Störung auf der Übertragungsstrecke ST ergeben sich aus dem fehlerfreien ersten Binärsignal B1a ein fehlerbehaftetes übertragenes erstes Binärsignal B1b (dritter Fehlerfall FF3) und aus dem fehlerfreien verknüpften binären Fehlersignal FESva ein fehlerbehaftetes übertragenes verknüpftes binäres Fehlererkennungssignal FESvb (vierter Fehlerfall FF4). Darüberhinaus mögen das erste binäre Fehlererkennungssignal FES1 (fünfter Fehlerfall FF5) und das vierte Binärsignal B4 (sechster Fehlerfall FF6) vor der Übertragungsstrecke ST fehlerbehaftet sein. Das vom Vergleicher V beim Vergleich zwischen dem übertragenen verknüpften binären Fehlererkennungssignal FESvb und dem zweiten redundanten Binärsignal RB2 erzeugte Vergleichssignal VS ist infolge des Phasenversatzes PV zwischen dem dritten Binärsignal B3 und dem ersten Binärsignal B1a bzw. zwischen dem vierten Binärsignal B4 und dem zweiten Binärsignal B2a ein periodisches Rechtecksignal, dessen Periodizität an den Stellen der vier Fehlerfälle FF3-FF6 eine entsprechende Störung aufweist. Das Vergleichssignal VS des Vergleichers V wird vom Zeitglied Z in ein zeitverzögertes Vergleichssignal ZVS umgewandelt, das gegenüber dem Vergleichssignal VS dementsprechend einen größeren Phasenversatz als der oben erwähnte Phasenversatz PV aufweist. Aus diesem zeitverzögerten Vergleichssignal ZVS wird in der zweiten Fehlererkennungseinheit FE2 unter der Steuerung des Prüfimpulses PP des Prüfimpulsgebers PG das zweite binäre Fehlererkennungssignal FES2 gewonnen. Da der Prüfimpuls PP eine Impulsdauer kleiner als der Phasenversatz PV aufweist, ist gewährleistet, daß das zweite binäre Fehlererkennungssignal FES2 nur an den Stellen der vier Fehlerfälle FF3-FF6 den Signalpegel 1 für den fehlerhaften Zustand und im übrigen Bereich den Signalpegel 0 für den fehlerfreien Zustand aufweist.

Das am Ausgang der zweiten Fehlererkennungseinheit FE2 anstehende zweite binäre Fehlererkennungssignal FES2 zur Charakterisierung des fehlerfreien Zustandes oder des fehlerhaften Zustandes wird einer Fehleranzeigeeinheit FA mit einer bistabilen Kippstufe FF, einem Verstärker VS und einer Warnlampe WL zugeführt. Im fehlerfreien Zustand steuert das zweite binäre Fehlererkennungssignal FES2 mit dem Signalpegel 0 die bistabile Kippstufe FF nicht an, so daß die Warnlampe WL bei diesem fehlerfreien Zustand nicht aufleuchtet. In den fehlerhaften Zuständen (Fehlerfälle FF3-FF6) wird die bistabile Kippstufe FF vom zweiten binären Fehlererkennungssignal FES2 mit dem Signalpegel 1 angesteuert, so daß die Warnlampe WL bei diesen fehlerhaften Zuständen aufleuchtet.

Das dem Vergleicher V nachgeschaltete Zeitglied Z dient zum Ausgleich unterschiedlicher Laufzeiten bei der Übertragung des ersten Binärsignals B1a und des zweiten Binärsignals B2a sowie des verknüpften binären Fehlererkennungssignals FESva. Neben diesen Zeitfehlern können durch unterschiedliche Schaltpunkte der vier Trigger T1-T4 der Abtasteinheit A die vier zugehörigen Binärsignale B1a, B2a, B3, B4 vor der Übertragungsstrecke ST auch gegenseitige unterschiedliche Wegfehler in Form jeweils eines entsprechenden unterschiedlichen Phasenversatzes aufweisen. Durch die gegenüber dem ersten Trigger T1 und dem zweiten Trigger T2 größere Hysterese des dritten Triggers T3 und des vierten Triggers T4 wird gewährleistet, daß das dritte Binärsignal B3 gegenüber dem ersten Binärsignal B1a und das vierte Binärsignal B4 gegenüber dem zweiten Binärsignal B2a gemeinsam wegmäßig um den oben erwähnten Phasenversatz PV nacheilen. Durch diese Maßnahmen in Verbindung mit der zusätzlichen Maßnahme, daß der Prüfzeitpunkt für das zeitverzögerte Vergleichssignal ZVS in der zweiten Fehlererkennungseinheit FE2 durch den aus den Flanken des übertragenen ersten Binärsignals B1b und des übertragenen zweiten Binärsignals B2b abgeleiteten Prüfimpuls PP festgelegt ist, werden zum Prüfzeitpunkt die oben erwähnten Zeitfehler und Wegfehler in der ersten Fehlererkennungseinheit FE1 nicht wirksam. Wie aus dem fünften Fehlerfall FF5 ersichtlich, ist zur sicheren Fehlererkennung eine Relativbewegung (Meßbewegung) zwischen der Abtasteinheit A und der Maßverkörperung M erforderlich.

In nicht gezeigter Weise kann das zweite redundante Binärsignal RB2 auch aus entsprechenden Binärsignalen im Richtungsdiskriminator oder im Zähler der Zähler-/Anzeigeeinheit ZA der Auswerteeinheit AW gewonnen werden, so daß auch der Richtungsdiskriminator und zumindest eine Zählstufe des Zähles gleichfalls der Fehlerüberwachung unterliegen; insbesondere bildet das Binärsignal der ersten Zählstufe (Stufe der Wertigkeit $2°$) des Zählers bereits das zweite redundante Binärsignal RB2.

Die Erfindung ist außer bei lichtelektrischen auch bei magnetischen, induktiven und kapazitiven Längen- oder Winkelmeßeinrichtungen mit Erfolg einsetzbar.

**Ansprüche**

1. Digitale elektrische Längen- oder Winkelmeßeinrichtung mit mindestens zwei Ausgängen einer Abtasteinheit (A), die zweinander phasenverschobene Binärsignale (B1a, B2a) liefern, und mit einer Schaltungsanordnung zur Fehlerüberwachung bei der Übertragung wenigstens zweier dieser Binärsignale (B1a, B2a) über eine Übertragungsstrecke (ST) an eine Auswerteeinheit (AW), dadurch gekennzeichnet, daß vor der Übertragungsstrecke (ST) eine erste logische Verknüpfungseinheit (AG1) zur Erzeugung eines ersten redundanten Binärsignals (RB1a) aus den wenigstens zwei Binärsignalen (B1a, B2a) und nach der Übertragungsstrecke (ST) eine zweite logische Verknüpfungseinheit (AG2) zur Erzeugung eines zweiten redundanten Binärsignals (RB2) aus den wenigstens zwei übertragenen Binärsignalen (B1b, B2b) sowie nach der Übertragungsstrecke (ST) ein Vergleicher (V) zum Vergleich des übertragenen ersten redundanten Binärsignals (RB1b) mit dem zweiten redundanten Binärsignal (RB2) und zur Erzeugung eines binären Fehlererkennungssignals (FES) zur Charakterisierung der Gleichheit oder der Ungleichheit zwischen den beiden redundanten Binärsignalen (RB1b, RB2) vorgesehen sind.

2. Meßeinrichtung nach Anspruch 1, dadurch gekennzeichnet, daß eine erste Fehlererkennungseinheit (FE1) zur Erzeugung eines ersten binären Fehlererkennungssignals (FES1) von wenigstens zwei, der Bildung der wenigstens zwei Binärsignale (B1a, B2a) dienenden Analogsignalen (S1, S2) der Abtasteinheit (A) beaufschlagt ist, daß vor der Übertragungsstrecke (ST) eine dritte logische Verknüpfungseinheit (AG3) zur Erzeugung eines verknüpften binären Fehlererkennungssignals (FESva) aus dem ersten binären Fehlererkennungssignal (FES1) und dem ersten redundanten Binärsignal (RB1) und nach der Übertragungsstrecke (ST) der Vergleicher (V) zum Vergleich des übertragenen verknüpften binären Fehlererkennungssignals (FESvb) mit dem zweiten redundanten Binärsignal (RB2) vorgesehen sind.

3. Meßeinrichtung nach Anspruch 2, dadurch gekennzeichnet, daß die Abtasteinheit (A) einmal einen ersten Trigger (T1) zur Bildung eines ersten Binärsignals (B1a) und einen dritten Trigger (T3) zur Bildung eines dritten Binärsignals (B3) aus einem ersten Analogsignal (S1) und zum anderen einen zweiten Trigger (T2) zur Bildung eines zweiten Binärsignals (B2a) und einen vierten Trigger (T4) zur Bildung eines vierten Binärsignals (B4) aus einem zweiten Analogsignal (S2) aufweist und daß die erste logische Verknüpfungseinheit (AG1) zur Erzeugung des ersten redundanten Binärsignals (RB1) aus dem dritten Binärsignal (B3) und dem vierten Binärsignal (B4) vor der Übertragungsstrecke (ST) und die zweite logische Verknüpfungseinheit (AG2) zur Bildung des zweiten redundanten Binärsignals (RB2) aus dem übertragenen ersten Binärsignal (B1b) und dem übertragenen zweiten Binärsignal (B2b) nach der Übertragungsstrecke (ST) vorgesehen sind.

4. Meßeinrichtung nach Anspruch 2, dadurch gekennzeichnet, daß dem Vergleicher (V) eine zweite Fehlererkennungseinheit (FE2) zur Erzeugung eines zweiten binären Fehlererkennungssignals (FES2) zur Charakterisierung der Gleichheit oder der Ungleichheit zwischen dem übertragenen verknüpften binären Fehlererkennungssignal (FESvb) und dem zweiten redundanten Binärsignal (RB2) nachgeschaltet ist.

5. Meßeinrichtung nach den Ansprüchen 1 und 2, dadurch gekennzeichnet, daß die drei logischen Verknüpfungseinheiten (AG1, AG2, AG3) jeweils aus einem Antivalenzgatter bestehen.

6. Meßeinrichtung nach Anspruch 4, dadurch gekennzeichnet, daß die zweite Fehlererkennungseinheit (FE2) von einem aus dem übertragenen ersten Binärsignal (B1b) und dem übertragenen zweiten Binärsignal (B2b) nach der Übertragungsstrecke (ST) abgeleiteten Prüfimpuls (PP) eines Prüfimpulsgebers (PG) beaufschlagt ist.

7. Meßeinrichtung nach Anspruch 4, dadurch gekennzeichnet, daß zwischen dem Vergleicher (V) und der zweiten Fehlererkennungseinheit (FE2) ein Zeitglied (Z) vorgesehen ist.

8. Meßeinrichtung nach Anspruch 1, dadurch gekennzeichnet, daß die Übertragungsstrecke (ST) mit Leitungstreibern (LT1, LT2, LTR) und mit Leitungsempfängern (LE1, LE2, LER) versehen ist.

9. Meßeinrichtung nach Anspruch 3, dadurch gekennzeichnet, daß das dritte Binärsignal (B3) gegenüber dem ersten Binärsignal (B1a) und das vierte Binärsignal (B4) gegenüber dem zweiten Binärsignal (B2a) jeweils einen bestimmten Phasenversatz PV aufweisen.

## Claims

1. Digital electrical length or angle measuring device with at least two outputs of a sensing unit (A), which supply mutually phase-displaced binary signals (B1a, B2a), and with a circuit arrangement for monitoring errors in the transmission of at least two of these binary signals (B1a, B2a) over a transmission path (ST) to a processing unit (AW), characterized in that there are provided in advance of the transmission path (ST) a first logical combining unit (AG1) for generating a first redundant binary signal (RB1a) from the at least two binary signals (B1a, B2a) and after the transmission path (ST) a second logical combining circuit (AG2) for generating a second redundant binary signal (RB2) from the at least two binary signals (B1a, B2a), as well as after the transmission path (ST) a comparator (V) for comparing the transmitted first redundant binary signal (RB1b) with the second, redundant, binary signal (RB2) and for generating a binary error detection signal (FES) for characterizing the equality or the inequality of the two redundant binary signals (RB1b, RB2).

2. Measuring device according to claim 1, characterized in that a first error detection unit (FE1) is responsive, for generating a first binary error detection signal (FES1), to at least two analog signals (S1, S2) of the sensing unit (A) serving for the formation of the at least two binary signals (B1a, B2a), in that there are provided in advance of the transmission path (ST) a third logical combining unit (AG3) for generating a combined binary error detection signal (FESva) from the first binary error detection signal (FES1) and the first redundant binary signal (RB1) and after the transmission path (ST) the comparator (V) for comparing the transmitted combined binary error detection signal (FESvb) with the second redundant binary signal (RB2).

3. Measuring device according to claim 2, characterized in that the sensing unit (A) comprises on the one hand a first trigger (T1) for forming a first binary signal (B1a) and a third trigger (T3) for forming a third binary signal (B3) from a first analog signal (S1) and on the other hand a second trigger (T2) for forming a second binary signal (B2a) and a fourth trigger (T4) for forming a fourth binary signal (B4) from a second analog signal (S2) and in that the first logical combining unit (AG1) is provided in advance of the transmission path (ST) for generating the first redundant binary signal (RB1) from the third binary signal (B3) and the fourth binary signal (B4) and the second logical combining unit (AG2) is provided after the transmission path (ST) for forming the second redundant binary signal (RB2) from the transmitted first binary signal (B1b) and the transmitted second binary signal (B2b).

4. Measuring device according to claim 2, characterized in that there is connected after the comparator (V) a second error detection unit (FE2) for generating a second binary error detection signal (FES2) for characterizing the equality or the inequality between the transmitted combined binary error detection signal (FESvb) and the second redundant binary signal (RB2)

5. Measuring device according to claims 1 and 2, characterized in that the three logical combining units (AG1, AG2, AG3) are each formed from an exclusive OR gate.

6. Measuring device according to claim 4, characterized in that the second error detection unit (FE2) is responsive to a test pulse (PP) of a test pulse generator (PG), derived from the transmitted first binary signal (B1b) and the transmitted second binary signal (B2b) after the transmission path (ST).

7. Measuring device according to claim 4, characterized in that a delay element (Z) is provided between the comparator (V) and the second error detection unit (FE2).

8. Measuring device according to claim 1, characterized in that the transmission path (ST) is provided with line drivers (LT1, LT2, LTR) and with line receivers (LE1, LE2, LER).

9. Measuring device according to claim 3, characterized in that the third binary signal (B3) and the fourth binary signal (B4) have a predetermined phase-displacement PV relative to the first binary signal (B1a) and the second binary signal (B2a) respectively.

## Revendications

1. Dispositif électrique numérique pour mesurer des longueurs ou des angles avec au moins deux sorties d'une unité de palpage (A) qui fournissent des signaux binaires (B1a, B2a) en décalage de phase l'un par rapport à l'autre, et avec un circuit pour la surveillance d'erreurs lors de la transmission d'au moins deux de ces signaux binaires (B1a, B2a), par l'intermédiaire d'une voie de transmission (ST), à une unité d'évaluation (AW), caractérisé en ce qu'il est prévu, avant la voie de transmission (ST), une première unité logique combinatoire (AG1) pour produire un premier signal binaire redondant (RB1a) à partir des deux signaux binaires au moins (B1a, B2a), et, après la voie de transmission (ST), une deuxième unité logique combinatoire (AG2) pour produire un deuxième signal binaire redondant (RB2) à partir des au moins deux signaux binaires transmis (B1b, B2b), et, après la voie de transmission (ST), un comparateur (V) pour comparer le premier signal binaire redondant transmis (RB1b) au deuxième signal binaire redondant (RB2) et pour produire un signal binaire de reconnaissance d'erreur (FES) qui caractérise l'égalité ou l'inégalité entre les deux signaux binaires redondants (RB1b, RB2).

2. Dispositif de mesure selon la revendication 1, caractérisé en ce qu'une première unité de reconnaissance d'erreur (FE1), destinée à produire un premier signal binaire de reconnaissance d'erreur (FES1), est sollicitée par au moins deux signaux analogiques (S1, S2) de l'unité de palpage (A) qui servent à la formation des deux signaux binaires au moins (B1a, B2a), en ce qu'il est prévu, avant la voie de transmission (ST), une troisième unité logique combinatoire (AG3) pour produire un signal binaire combiné de reconnaissance d'erreur (FESva) à partir du premier signal binaire de reconnaissance d'erreur (FES1) et du premier signal binaire redondant (RB1), et, après la voie de transmission (ST), le comparateur (V) pour comparer le signal binaire combiné de reconnaissance d'erreur transmis (FESvb) au deuxième signal binaire redondant (RB2).

3. Dispositif de mesure selon la revendication 2, caractérisé en ce que l'unité de palpage (A) présente d'une part une première bascule (T1) pour former un premier signal binaire (B1a) et une troisième bascule (T3) pour former un troisième signal binaire (B3) à partir d'un premier signal analogique (S1), et d'autre part une deuxième bascule (T2) pour former un deuxième signal binaire (B2a) et une quatrième bascule (T4) pour former un quatrième signal binaire (B4) à partir d'un deuxième signal analogique (S2), et en ce que la première unité logique combinatoire (AG1) est prévue pour produire le premier signal binaire redondant (RB1) à partir du troisième signal binaire (B3) et du quatrième signal binaire (B4) avant la voie de transmission (ST), et la deuxième unité logique combinatoire (AG2) est prévue pour former le deuxième signal binaire redondant (RB2) à partir du premier signal binaire transmis (B1b) et du deuxième signal binaire transmis (B2b) après la voie de transmission (ST).

4. Dispositif de mesure selon la revendication 2, caractérisé en ce qu'une deuxième unité de reconnaissance d'erreur (FE2) est montée à la suite du comparateur (V) pour produire un deuxième signal binaire de reconnaissance d'erreur (FES2) destiné à caractériser l'égalité ou l'inégalité entre le signal binaire combiné de reconnaissance d'erreur transmis (FESvb) et le deuxième signal binaire redondant (RB2).

5. Dispositif de mesure selon les revendications 1 et 2, caractérisé en ce que les trois unités logiques combinatoires (AG1, AG2, AG3) sont chacune constituées d'une porte d'antivalence.

6. Dispositif de mesure selon la revendication 4, caractérisé en ce que la deuxième unité de reconnaissance d'erreur (FE2) est sollicitée par une impulsion de contrôle (PP) d'un générateur d'impulsions de contrôle (PG) qui est dérivée, à la suite de la voie de transmission (ST), du premier signal binaire transmis (B1b) et du deuxième signal binaire transmis (B2b).

7. Dispositif de mesure selon la revendication 4, caractérisé en ce qu'un élément de temporisation (Z) est prévu entre le comparateur (V) et la deuxième unité de reconnaissance d'erreur (FE2).

8. Dispositif de mesure selon la revendication 1, caractérisé en ce que la voie de transmission (ST) est munie d'excitateurs de ligne (LT1, LT2, LTR) et de récepteurs de ligne (LE1, LE2, LER),

9. Dispositif de mesure selon la revendication 3, caractérisé en ce que le troisième signal binaire (B3) et le quatrième signal binaire (B4) présentent chacun un décalage de phase déterminé (PV), respectivement par rapport au premier signal binaire (B1a) et par rapport au deuxième signal binaire (B2a).

FIG. 1

FIG. 2

FIG. 3

FIG. 4